# EUROPEAN PATENT APPLICATION

(11) **EP 1 724 895 A2**
(43) Date of publication of application: **22.11.2006**
(21) Application number: 06113996.0
(22) Date of filing: 16.05.2006
(51) Int. Cl.: H02G 3/00

(54) **Recessed tower for floor-mounted electrical installations, provided with removable device-holder modules**

(30) Priority: 17.05.2005 IT TO20050336
(71) Applicant: BTICINO S.p.A., 20154 Milano (IT)
(72) Inventor: Ricciardi, Rocco, I-21046 Malnate (Varese) (IT); Rocereto, Pietro, I-21040 Sumirago (Varese) (IT)
(74) Representative: Deambrogi, Edgardo

(57) **Abstract**

A recessed tower for floor-mounted electrical installations is described, comprising a container body (12) adapted to define a housing space (14) for electrical devices (16), defined by a base wall (20) and side walls (22a, 22b) of the container body (12), and capable of being accessed through a top main opening. The electrical devices are grouped into devices-holder modules (30) that can be removably coupled with the container body (12), which has walls provided with openings (60) of a size such as to allow the introduction of a corresponding module (30) in the housing space (14).

## Description

The present invention concerns in general the field of electrical installations, and in particular a recessed tower for floor-mounted electrical installations.

More specifically, the invention concerns a tower of the type mentioned in the preamble of claim 1.

Recessed floor-mounted towers according to the prior art generally comprise a container body adapted to define a housing space for modular electrical items or devices, in general connection devices such as plug sockets, TV sockets, telephone connectors and EDP connectors, collected into device-holder supports. Such supports are generally made as self-supporting supports, for example hinged onto the bottom of the tower to ease the cabling operations of the devices.

The housing space can be accessed by an operator through a main opening protected by a treadable cover. The side walls and/or the base wall of the tower have a plurality of predetermined pre-cut entry portions for the cables, generally circular in shape, capable of being knocked through and removed to define the desired through openings for the cables.

The cabling of the devices occurs after having taken the connection cables into the housing space of the devices through the openings defined on the walls of the container body of the tower, normally provided with cable-passing bushings.

On the other hand, a possible cabling of the devices without the tower does not allow them to be subsequently housed in it apart from a temporary decoupling from the cables, necessary to allow the introduction of the devices in the housing space through the main top opening, and the entry of the cables through the corresponding through openings made on the walls of the container body of the tower.

Disadvantageously, this affects the moment when it is possible to carry out the certification of an electrical installation comprising such devices, since the simple disconnection of a cable from a device, even if temporary, by law requires the certification of the entire installation to be repeated once the cabling has been performed once again.

Since the certification of an electrical installation in a building, both in terms of the mains current supply and data transmission, is usually carried out by men skilled in the art in charge before the finishing of the rooms is carried out, if the installation of the towers takes place at a later time, for example having to complete the laying of floating floors, it becomes necessary to carry out a further certification of the installation. Similarly, a further certification of the installation is necessary any time a tower is replaced.

All of this, of course, brings a drawback in terms of certification cost and time of the electrical installation of a building.

The present invention sets itself the task of avoiding the drawbacks of the prior art, i.e. of providing a solution of a recessed tower for floor-mounted electrical installations adapted to allow the definitive certification of the electrical installation of a building independently of the execution of the installation operations of the tower.

According to the present invention such purposes are accomplished thanks to a tower having the characteristics outlined in claim 1.

Particular embodiments are outlined in the dependent claims.

Further characteristics and advantages of the invention shall be outlined in greater detail in the following detailed description of an embodiment thereof, given as a non-limiting example, with reference to the attached drawings, in which:

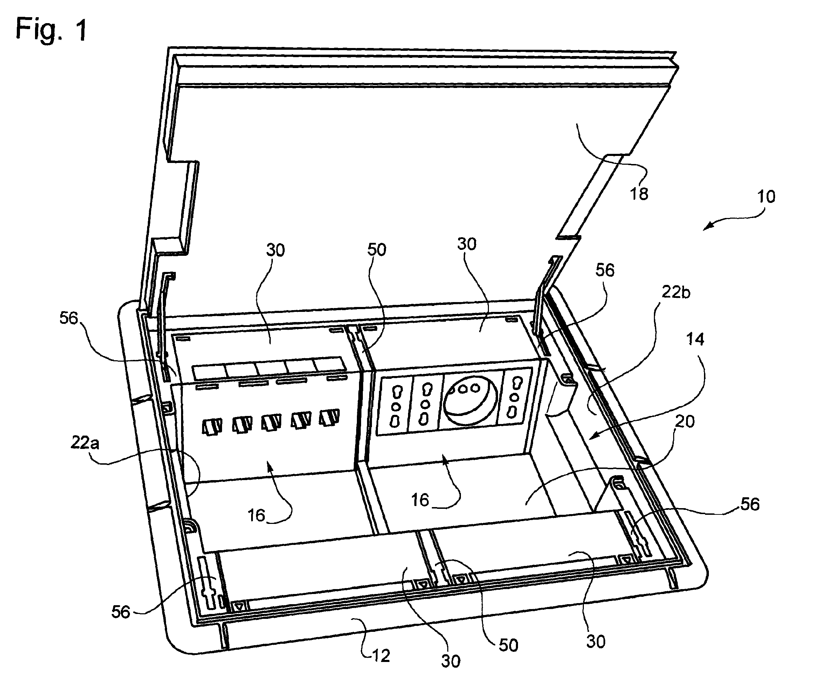

figure 1 is an overall perspective view of a recessed floor-mounted tower according to the invention, in an installed condition; and
figure 2 is an overall perspective view of the tower of figure 1 with a device-holder module removed.

In the figures, a recessed tower for floor-mounted electrical installations, comprising a container body 12 adapted to define a housing space 14 of electrical devices 16 is generally indicated with 10.

The tower also comprises a cover 18 hinged to the container body 12 at an edge thereof and adapted to take up a position closing the housing space 14 at the level of a treadable plane, like for example a raised or floating floor.

The housing space 14 is defined by a base wall 20 and a pair of opposite side walls 22a, 22b. At the sides between the side walls 22a, 22b device-holder modules 30 are arranged each carrying at least one and preferably a plurality of electrical item or devices, in a substantially similar way to wall-mounted boxes.

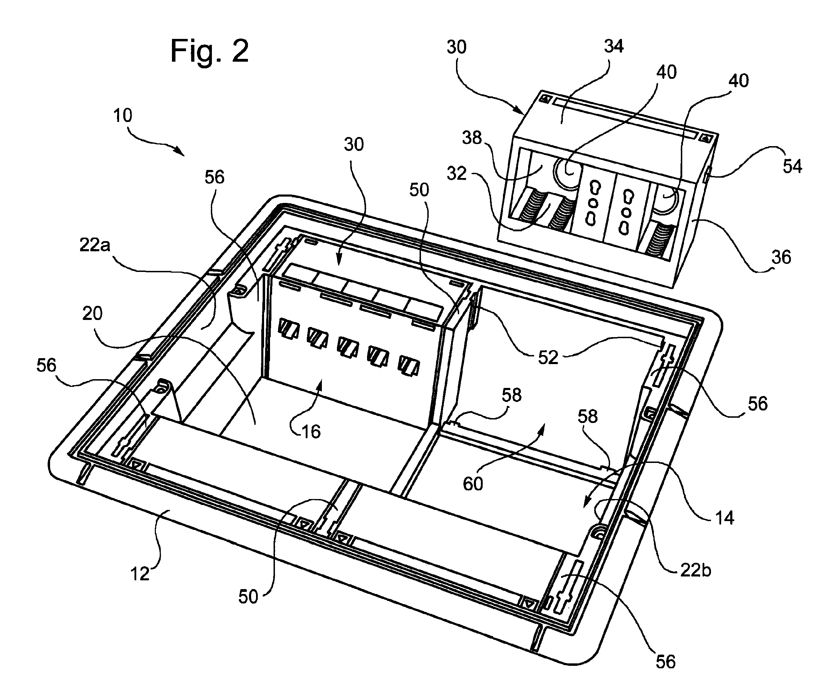

A module 30 partially engaged with electrical devices and separate from the housing tower is better illustrated in figure 2, in which the cover of the tower has been removed for greater clarity in the drawing.

Each module 30 is generally box-shaped, and includes a front frame or armature 32 for supporting the electrical devices in a side-by-side arrangement, a top wall 34, a bottom wall (not visible in the figures) and a pair of closed side walls (just one of which, indicated with 36, is visible in the figures), and a rear wall 38.

In the rear wall one or more generally circular pre-fractures are made, adapted to define corresponding weakened wall regions 40 capable of being knocked through and removed to form openings for the entry of the connection cables of the devices to the energy and/or signal distribution networks.

From the base wall 20 of the container body of the tower intermediate support formations 50 rise, in the form of partitions, carrying coupling means of the modules 30, for example seats 52 for the snap-engagement of retaining teeth 54 carried by the side walls of each module.

Similar coupling means of the modules 30 with the container body of the tower are provided on side support formations or shoulders 56 adjacent to the side walls 22a, 22b or integral therewith.

The intermediate support formations 50 and the side ones 56 between them define, at the sides of the tower situated between the side walls 22a, 22b, a plurality of access spaces 60 for the introduction of the device-holder modules 30, in a number equal to the number of modules than can be housed in the inner space of the tower.

The rear walls 38 of the modules 30, in a coupling condition of the modules to the container body, work together to form the side walls of the housing space 14 at the access spaces 60.

Preferably, other hooking means of the modules 30 to the container body 12 of the tower are provided, in the form of tabs 58 projecting from the base wall 20 of the space 14 towards the aperture of the access space 60 and adapted to snap-engage with corresponding seats (not depicted) defined on the bottom wall of the module 30.

Advantageously, the solution subject of the invention allows the cabling operation of the electrical devices to be made independent from the installation operation and setting up of the tower, as explained here.

First of all, a qualified technician can carry out the cabling of the devices with the connection cables to the energy and/or signal distribution networks, generally guided underground through cable-guide systems, by insertion of the cables into the modules 30 through cable-passing elements coupled with the openings made on the rear wall 38 of each individual module after the pre-fractures have been knocked through, grouping the devices in independent modules.

When cabling has occurred, the modules can be arranged on a temporary surface, for example rested on a back-piece or on a support structure for the laying of the raised flooring, and the technician can carry out the certification of the installation of the building.

Following the finishing of the rooms, during the course of the setting up of the elements of the raised flooring, the towers are installed and the previously cabled modules are introduced into them through the respective access spaces 60 until a snap-engagement configuration is achieved with the coupling means provided on the support formations 50, 56 and possibly on the base wall 20, without decoupling the devices from the respective cablings, therefore without having to get further certification.

Of course, without affecting the principle of the invention, the embodiments and the embodying details can be widely varied with respect to what has been described and illustrated just as a non-limiting example, without for this reason departing from the scope of protection of the present invention defined by the attached claims.

## Claims

1. Recessed tower for floor-mounted electrical installations, comprising a container body (12) adapted to define a housing space (14) of electrical devices (16), defined by a base wall (20) and side walls (22a, 22b) of the container body (12), and accessible through a top main opening, and a cover (18) for closing said opening at the level of a treadable plane,
**characterised in that** it comprises device-holder modules (30) that can be removably coupled to the container body (12), the walls of said container body (12) having openings (60) of a size such as to allow the introduction of a corresponding module (30) in the housing space (14).

2. Tower according to claim 1, in which said device-holder modules (30) are adapted to receive a plurality of electrical devices (16) in a side-by-side arrangement.

3. Tower according to claim 2, in which said device-holder modules (30) are generally closed box-shaped and comprise at least one respective rear wall (38) which has a plurality of predetermined portions (40) for the entry of cables, said walls (38) combining to form a side wall of the housing space (14) in a coupling condition of said modules (30) to the container body (12).

4. Tower according to claim 3, in which said portions (40) for the entry of the cables are made as wall regions that are weakened through pre-cutting, capable of being knocked through and removed to define a desired through opening for the cables.

5. Tower according to any one of the previous claims, in which said container body (12) has side support formations (56) and intermediate ones (50) carrying coupling means (52) of the device-holder modules (30), which are arranged in such a way as to define between them a plurality of openings (60) for the introduction of the modules (30), in a number equal to the number of modules (30) able to be housed in the space (14) of the tower.

6. Tower according to claim 5, in which said support formations include at least one middle partition (50) that rises from the base wall (20) of the container body (12) and a pair of side shoulders (56) adjacent to the side walls (22a, 22b) of said body (12) or integral therewith, carrying seats (52) for the snap-engagement of retaining teeth (54) associated with side walls (36) of a device-holder module (30).

7. Tower according to claim 6, in which said container body (12) has further coupling means of the device-holder modules (30), in the form of tabs (58) projecting from the base wall (20) towards respective openings (60) for the introduction of the modules (30) and adapted to snap-engage with corresponding seats defined on a bottom wall of the module 30.
